# EUROPÄISCHE PATENTSCHRIFT

(11) **EP 2 676 781 B1**
(45) Veröffentlichungstag und Bekanntmachung des Hinweises auf die Patenterteilung: **21.01.2015**
(21) Anmeldenummer: 13172542.6
(22) Anmeldetag: 18.06.2013
(51) Int. Cl.: B29C 45/16, B29C 45/26, A46B 9/02, A46D 3/00, B29L 31/42

(54) **Verfahren und Vorrichtung zur Herstellung einer einstückig mehrkomponentig spritzgegossenen Bürste**
Method and device for producing a single-piece multi-component injection moulded brush
Procédé et dispositif de fabrication d'une brosse à plusieurs composants moulée par injection d'une seule pièce

(30) Priorität: 20.06.2012 DE 102012012114
(43) Veröffentlichungstag der Anmeldung: 25.12.2013
(73) Patentinhaber: GEKA GmbH, 91572 Bechhofen (DE)
(72) Erfinder: Wolfsgruber, Dieter, 91595 Burgoberbach (DE)
(74) Vertreter: Misselhorn, Hein-Martin

(56) Entgegenhaltungen:
- EP-A2- 2 389 833
- WO-A1-02/03831
- US-A1- 2010 037 911
- US-A1- 2011 297 175

## Beschreibung

Die Erfindung betrifft ein Verfahren nach dem Oberbegriff des Anspruchs 1, das zur Herstellung einer Bürste, insbesondere in Gestalt eines Mascara-Applikators, dient.

Klassischer Weise wurden Mascara-Applikatoren in Gestalt von Bürsten lange Zeit ausschließlich so hergestellt, dass Natur- oder Kunstfasern zwischen zwei zunächst noch gerade Drähte eingelegt wurden. Im Anschluss daran wurden diese Drähte verdrillt und hielten die zwischen sie eingelegten Fasern in einer bestimmten Konfiguration fest. Man bezeichnet solche Bürsten gemeinhin als Drahtkernbürsten.

Drahtkernbürsten haben viele vorteile. Sie weisen jedoch alle einen entscheidenden Nachteil auf, nämlich den, dass sich der Abstand der einzelnen Borsten des Borstenbesatzes voneinander nur innerhalb von sehr engen Bereichen variieren lässt. Es ist praktisch unmöglich, einen Applikator herzustellen, der rundum und entlang der Längsrichtung einen wirklich gleichmäßigen Borstenbesatz aufweist. Stattdessen ist es bei Drahtkernbürsten stets so, dass der Besatz entlang einer Schraubenlinie, die der Verdrillung der Drähte folgt, am dichtesten ist, während er in anderen Bereichen weniger dicht ist.

Die WO 02/03831 A1 offenbart ein Verfahren, bei dem bewegliche Stifte in einer ersten Spritzstufe die Kavität durchgreifen und die Formkanäle verschließen, um hohle Borsten zu spritzen, die in der zweiten Spritzstufe ausgefüllt werden.

Die US 2010/037911 A1 beschreibt ein Herstellungsverfahren, bei dem der Injektor einen gewissen Aufbau aufweist.

Die US 2011/297175 A1 und EP 2 389 833 A2 offenbaren einen Applikator, welcher aus mehreren Materialien hergestellt wird.

Nachdem immer filigranere Spritzgussformen hergestellt werden konnten, werden seit etwa zehn Jahren zunehmend gespritzte 35 Bürsten hergestellt, die dann als Mascara-Applikator Verwendung finden. Es handelt sich dabei um einstückige Bürsten, bei denen der Borstenträger und die davon abstehenden Borsten aus ein und demselben Material gefertigt sind, und zwar im Regelfall einstückig durch Spritzguss. Zur Herstellung solcher Bürsten werden Spritzgussformen verwendet, die eine Hauptkavität aufweisen, die den Borstenträger bildet. Hiervon zweigen, meist im rechten Winkel, Nebenkavitäten ab. Jede der Nebenkavitäten bildet einen Hohlraum, der eine Borste ausformt.

Auf diese Art und Weise lassen sich Bürsten herstellen, deren Borstenbesatz, was den Durchmesser, die Länge, die Borstendichte usw. angeht, in weiten Bereichen variiert werden kann, und der daher sehr gut an die individuellen Anforderungen für die Applikation anpassbar ist.

In der Praxis kommt immer wieder der Wunsch auf, die gespritzten Applikatoren den Drahtkernapplikatoren auch insoweit nachzuempfinden, als dass die gespritzten Applikatoren mit Borsten unterschiedlicher Härte versehen werden.

In gewissem Umfang kann man die Härte der Borsten auch bei Verwendung nur eines einzigen Materials dadurch steuern, dass der Borstendurchmesser entsprechend eingestellt wird und Borsten, die weicher zu sein haben, einen kleineren Durchmesser erhalten. Dennoch sind dem Grenzen gesetzt, da die Borsten einen gewissen Mindestdurchmesser haben müssen, um beim Ausformen nicht abzureißen.

Aufgrund dessen sind bereits Lösungen vorgeschlagen worden, bei denen an einen gespritzten Applikator borstentragende Teile, die aus einem anderen Kunststoff gefertigt sind, angeschweißt oder angeklebt werden. Derartiges ist aufwendig, zudem ist nicht immer eine zuverlässige Verbindung gewährleistet. Außerdem lässt sich nicht ausschließen, dass zwischen den durch Kleben zusammengefügten Reihen Spalten verbleiben, in denen sich die zu applizierende Masse dauerhaft ablagern kann, was nachteilig ist, da unter Umständen eine Verkeimung die Folge ist.

Ebenfalls bereits vorgeschlagen worden sind Applikatoren, bei denen an einen Borstenträger, der mit Borsten aus einem ersten Material ausgerüstet ist, ein weiterer Borstenträger angeclipst wird, der mit Borsten aus einem zweiten Material ausgestattet ist. Auch derartiges ist unbefriedigend, da das Aufclipsen einen zusätzlichen Montageschritt bedeutet und sich zudem in der Trennfuge zwischen den aneinandergeclipsten Teilen wiederum Kosmetikmasse ansammeln kann, die dann einen Nährboden für Keime bildet.

Demgegenüber ist es die Aufgabe der vorliegenden Erfindung, einen Weg anzugeben, um rationell Bürsten, insbesondere zierliche Bürsten in Gestalt von Mascara-Applikatoren, herstellen zu können, die mit Borsten aus unterschiedlichen Kunststoffen ausgerüstet sind und insgesamt durch Spritzgießen hergestellt werden können.

Diese Aufgabe wird mit einem Verfahren gemäß des Anspruchs 1 der Patentanmeldung gelöst.

Es wird ein Verfahren zur Herstellung einer Bürste und insbesondere eines Mascara-Applikators mit aus unterschiedlichen Spritzgussmassen spritzgegossenen Borsten vorgeschlagen. Ein solcher Applikator, der mit Borsten besetzt ist, wird auch Bürste genannt. Die Borsten haben vorzugsweise eine besondere Flexibilität, wie sie am Ende der Beschreibung angegeben wird. Das Verfahren wird mit Hilfe einer Spritzgussform durchgeführt, die eine Hauptkavität aufweist, welche den Borstenträger bildet. Hiervon gehen Nebenkavitäten ab, von denen jeweils eine Nebenkavität eine einzige Borste bildet. In nacheinander folgenden Schritten wird zumindest eine erste und dann, im Anschluss daran, eine zweite Spritzgussmasse in die Hauptkavität eingespritzt. Dabei ist in die Hauptkavität mindestens ein Schieber eingebracht, der zunächst einen Teil der borstenbildenden Nebenkavitäten derart verschließt, dass die erste Spritzgussmasse nur in einen anderen Teil der Nebenkavitäten einschießt, aber nicht in die von dem Schieber abgedeckten Nebenkavitäten. In einem nächsten Verfahrensschritt, nach dem Übergang der ersten Spritzgussmasse aus dem flüssigen in den festen Zustand, wird der Schieber gezogen und die zweite Spritzgussmasse wird so eingespritzt, dass sie in die bisher von dem Schieber verschlossenen Nebenkavitäten einschießt. Wenn die zweite Spritzgussmasse sich materialmäßig von der ersten Spritzgussmasse unterscheidet, dann erhält man auf diese Art und Weise eine Mascarabürste mit spritzgegossenen Borsten, die quasi einstückig ist, weil sich die beiden Spritzgussmassen ähnlich wie eine Verschweißung miteinander verbunden haben, und bei der die Borsten aus unterschiedlichen Materialien bestehen und damit unterschiedliche Applikationseigenschaften aufweisen. Rein der Vollständigkeit halber (aber nicht bevorzugt) ist es auch anspruchsgemäß, wenn sich die beiden Spritzgussmassen nur farblich unterscheiden, so dass das erfindungsgemäße Verfahren nur dazu genutzt wird, um optisch besonders ansprechende, einstückige Bürsten zu schaffen.

vorzugsweise wird die zweite Spritzgussmasse, die in dem weiteren Verfahrensschritt einschießt, durch jenen Hohlraum an die noch nicht gefüllten Nebenkavitäten herangeführt, den der zuvor gezogene Schieber in der Hauptkavität hinterlassen hat. Auf diese Art und Weise steht ein sehr breiter, vorzugsweise zumindest im Wesentlichen druckverlustfrei durchströmbarer Kanal zu Verfügung, über den die zweite Spritzgussmasse bis an die Stelle herangeführt werden kann, an der die Hauptkavität jeweils in die Nebenkavitäten einmündet. Es wird so sichergestellt, dass auch diejenigen Nebenkavitäten, die für die zweite Spritzgussmasse bestimmt sind, sauber von dieser aufgefüllt werden, so dass diese fehlerfrei diejenigen Borsten bilden, die aus dem zweiten Spritzgussmaterial zu bestehen haben.

Eine bevorzugte Ausführungsform sieht vor, dass der Schieber und die Spritzgussform, in die er eingeschoben wird, so ausgestaltet sind, dass der Schieber in Richtung der Längsachse des Mascara-Applikators aus der Hauptkavität herausgezogen werden kann. Solche in Richtung zur Längsachse zu ziehenden Schieber setzt man dann ein, wenn der jeweilige Applikator einen Kern mit einem relativ großen Kerndurchmesser aufweist oder nur ein einzelner Schieber zum Einsatz kommt.

In anderen Anwendungsfällen der erfindungsgemäßen Technologie ist es besonders vorteilhaft, einen oder mehrere in radialer Richtung zu steckende und wieder zu ziehende Schieber vorzusetzen.

Ein derartiger Radialschieber und der ihm bestimmungsgemäß zugeordnete Bereich der Hauptkavität sind idealerweise so ausgestaltet, dass der Schieber von einer Seite her in radialer Richtung eingeschoben ("gesteckt") wird, die Hauptkavität in radialer Richtung durchquert und dann auf der (in Steckrichtung gesehen) gegenüberliegenden Seite einen Bereich am Innenumfang der Hauptkavität abdeckt, von dem borstenbildende Nebenkavitäten abzweigen.

Idealerweise ist am Umfang der Hauptkavität eine Nut angebracht, die sich mit ihrer Längsrichtung parallel zur Längsachse der Hauptkavität erstreckt.

Diese Nut liegt bei Verwendung eines Radialschiebers auf der gegenüberliegenden Seite der Öffnung, in die der Radialschieber in die Hauptkavität eingeschoben wird.

Die vom Radialschieber abzudichtenden Nebenkavitäten münden in den Nutgrund ein. Der vollständig eingeschobene Radialschieber kommt so in der Nut zu liegen, dass die Nutseitenwände eine ansonsten unter dem Einfluss des Einspritzdrucks drohende Bewegung des Radialschiebers in Richtung senkrecht zu seiner Einschubrichtung verhindern oder zumindest verringern. Vorzugsweise weist der Schieber mindestens eine sich in Richtung parallel zur Längsachse der Hauptkavität erstreckende, über seine umgebende Oberfläche herausragende Leiste auf, die im in die Spritzgussform eingesetzten Zustand die zur Hauptkavität hin offenen Mündungen einer Reihe von Nebenkavitäten abdichtet, welche in dem fertigen Applikator eine Reihe von in Längsrichtung hintereinander stehenden Borsten abbilden. Auf diese Art und Weise ist es sehr einfach möglich, Reihen von Borsten mit abweichenden Eigenschaften auszubilden, etwa den gesamten Borstenbesatz mit einer Reihe besonders harter Borsten auszustatten, die einen Kamm bilden.

Im Rahmen einer bevorzugten Ausführungsform ist vorgesehen, dass der Schieber eine Leiste aufweist, die in eine am Umfang der Hauptkavität angebrachte, sich in Richtung im Wesentlichen parallel zur Längsachse des Applikators erstreckende Nut eingreift. Ein solches Eingreifen der Leiste, die die Nebenkavitäten abdichtet, in eine Nut erleichtert die Abdichtung der Nebenkavitäten.

Wie oben schon am Beispiel des Radialschiebers erläutert, kann eine solche Nut dazu dienen, den Schieber innerhalb der Hauptkavität zu zentrieren bzw. eine definierte Position des Schiebers innerhalb der Hauptkavität vorzugeben. Auf diese Art und Weise lässt sich leichter sicherstellen, dass der Schieber stets korrekt innerhalb der Hauptkavität positioniert ist. Das gilt auch für Längsschieber, d. h. Schieber, die in Richtung der Längsachse der Hauptkavität gesteckt oder gezogen werden.

Vorteilhafterweise münden dabei die zur Hauptkavität hin offenen Mündungen einer Anzahl von Nebenkavitäten in den Nutgrund. Auch dies verbessert die Abdichtung.

Gleichgültig, ob der Schieber als Radialschieber oder Längsschieber gestaltet ist, gilt vorzugsweise, dass die Leiste in der Nut dichtend anliegt, d. h., sie dichtet entweder gegen den Nutgrund und/oder gegen die beiden Nutseitenwände. Optimal ist es, wenn die Leiste zusätzlich auf zumindest einer Seite neben der Nut dichtend anliegt. Auf diese Art und Weise wird ein Dichtspalt bzw. eine Dichtfläche geschaffen, die nicht kontinuierlich verläuft, sondern zumindest an einer Stelle, vorzugsweise sogar mehrfach, sprunghaft ihre Richtung ändert, vorzugsweise um einen Winkel von mehr als 45°, idealerweise um einen Winkel von mehr als 60°. So entsteht eine Art Labyrinth, das eine bessere Abdichtwirkung gewährleistet.

Vorzugsweise ist der Schieber, der in die Hauptkavität eingeschoben wird, mehrteilig. Auf diese Art und Weise ist es möglich, nicht nur Borsten zwischen zwei unterschiedlichen Materialien zu variieren, sondern gegebenenfalls auch Borsten aus drei oder mehr unterschiedlichen Materialien herzustellen.

Weitere Ausgestaltungsmöglichkeiten, Vorteile und Wirkungsweisen der Erfindung ergeben sich aus der nachfolgenden Beschreibung der Erfindung anhand der Ausführungsbeispiele.

Die Fig. 1 zeigt einen Schnitt durch eine ein erstes Ausführungsbeispiel darstellende Spritzgussform senkrecht zur Längsachse der Hauptkavität und der Schieber.

Die Fig. 2 zeigt eine mit Hilfe der Spritzgussform gemäß Fig. 1 hergestellte Mascarabürste.

Die Fig. 3 zeigt einen Schnitt durch eine ein zweites Ausführungsbeispiel darstellende Spritzgussform senkrecht zur Längsachse der Hauptkavität und der Schieber.

Die Fig. 4 zeigt eine mit Hilfe der Spritzgussform gemäß Fig. 3 hergestellte Mascarabürste.

Die Fig. 5 zeigt einen Schnitt durch eine ein drittes Ausführungsbeispiel darstellende Spritzgussform senkrecht zur Längsachse der Hauptkavität und der Schieber.

Die Fig. 6 zeigt eine mit Hilfe der Spritzgussform gemäß Fig. 5 hergestellte Mascarabürste.

Die Fig. 7 zeigt einen Schnitt durch eine ein viertes Ausführungsbeispiel darstellende Spritzgussform senkrecht zur Längsachse der Hauptkavität und der Schieber.

Die Fig. 8 zeigt einen Schnitt durch eine ein fünftes Ausführungsbeispiel darstellende Spritzgussform senkrecht zur Längsachse der Hauptkavität und der Schieber.

Die Fig. 9 zeigt ein sechstes Ausführungsbeispiel.

Die Fig. 10 zeigt ein Ausführungsbeispiel, bei dem zur Herstellung des von Fig. 7 gezeigten Applikators ein Radialschieber anstatt eines Längsschiebers verwendet wird.

Die Fig. 11 zeigt eine Seitenansicht der mit Hilfe der Spritzgussform gemäß Fig. 10 hergestellten Mascarabürste.

Die Fig. 12 zeigt einen Längsschnitt durch die von Fig. 10 gezeigte Mascarabürste.

Die Fig. 13 zeigt das Ausführungsbeispiel gemäß Fig. 10 bei zurückgezogenem Radialschieber und nach dem Einspritzen der zweiten Spritzgussmasse.

Die Fig. 14 verdeutlicht die Definition des Begriffs Borste.

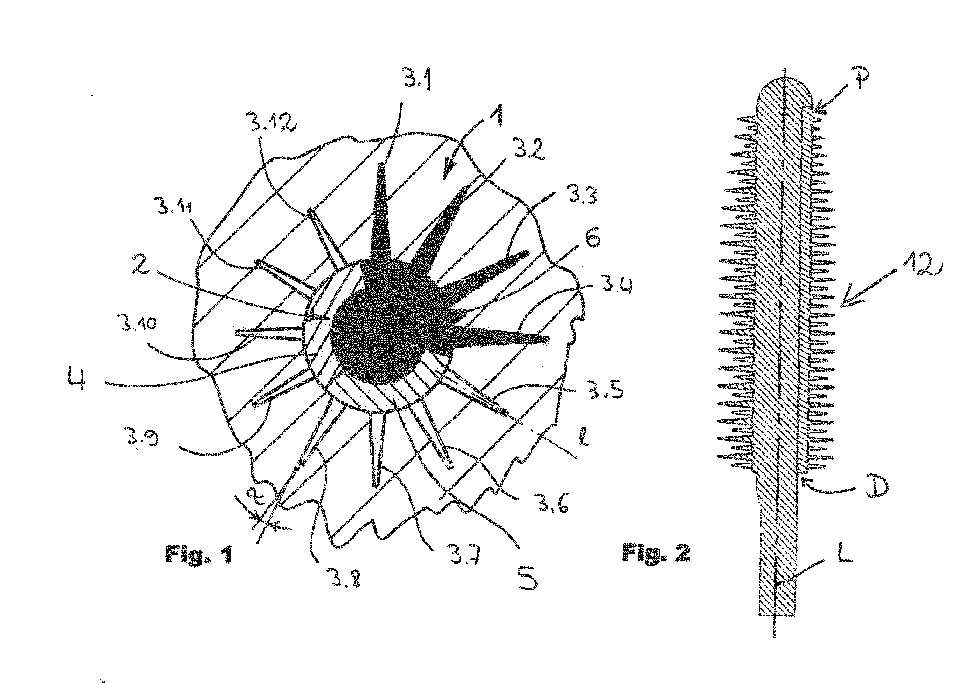

Die Fig. 1 stellt in großflächiger Schraffur einen Ausschnitt aus der Spritzgussform dar, deren Gestaltung nur im Bereich der Kavität von näherem Interesse ist, die den späteren Applikator abbildet.

Die Spritzgussform ist in einzelne, tortenstückartige Segmente aufgeteilt, die in radialer Richtung auseinandergefahren werden können, um den fertiggespritzten Applikator zu entformen - was von der Fig. 1 und auch den anderen Figuren nicht näher gezeigt, aber zu Grunde gelegt wird.

Die Spritzgussform weist eine Hauptkavität 1 auf, die eine Längsachse L besitzt, welche senkrecht zur Zeichenebene verläuft, Fig. 2. Senkrecht von dieser Hauptkavität zweigen Nebenkavitäten 3.1, 3.2, 3.3 usw. ab. Jede dieser Nebenkavitäten ist vorzugsweise leicht kegelig ausgebildet, idealerweise mit einem Kegelwinkel α von 0,2° bis 5°. Jede dieser Nebenkavitäten formt eine einzelne Borste. Der Querschnitt jeder einzelnen Nebenkavität senkrecht zu ihrer Längsachse 1 ist vorzugsweise rund oder oval bzw. elliptisch.

Die Fig. 1 zeigt die Spritzgussform in einem Stadium, in dem bereits die erste Spritzgussmasse in die Kavität eingespritzt worden ist, so dass sie die Kavität, soweit sie zugänglich ist, vollständig ausfüllt, was durch die schwarze Farbe angedeutet ist.

In die Hauptkavität sind zu diesem Zeitpunkt zwei Schieber 4 und 5 eingeschoben. Diese beiden Schieber haben hier jeweils die Gestalt eines Rohrsegments. Sie sind geschliffen. Insbesondere ist ihr Außenumfang jeweils so geschliffen, dass er sich dicht an den Innenumfang anlegt, der die Hauptkavität der Spritzgussform umgrenzt.

Jeder dieser beiden Schieber 4 und 5 liegt vor den Mündungen mehrerer Nebenkavitäten und verhindert so, dass die erste Spritzgussmasse in diese Nebenkavitäten eintreten kann. Außerdem hält jeder dieser Schieber einen Teil der Hauptkavität frei von der ersten Spritzgussmasse. Auf diese Art und Weise wird beim Einspritzen der ersten Spritzgussmasse nur ein Teil der Hauptkavität und ein Teil der Nebenkavitäten mit der ersten Spritzgussmasse ausgefüllt.

Der Druck der ersten Spritzgussmasse wirkt insbesondere auf den Innenumfang der Schieber 4, 5 und presst den Außenumfang dieser Schieber gegen den Innenumfang der Spritzgussform, der die Hauptkavität begrenzt. Auf diese Art und Weise wird dafür gesorgt, dass die Schieber die Nebenkavitäten 3.5 bis 3.12 auch wirklich dicht abdichten, weil sie umso fester gegen die Wand der Hauptkavität gepresst werden, desto höher der Einspritzdruck der ersten, hier schwarz dargestellten, Spritzgussmasse ist.

Durch dieses "fester Anpressen" der konvexen Außenfläche des jeweiligen Schiebers an die konkave Innenoberfläche der Hauptkavität wird auch die Position des von der Stirnseite her eingeschobenen, und daher als eine Art "einseitig eingespannter Kragträger" in die Hauptkavität hineinragenden, Schiebers stabilisiert.

Nachdem die erste Spritzgussmasse vollständig eingespritzt worden ist, wird einen Moment lang gewartet, bis die erste Spritzgussmasse in der Hauptkavität und selbstverständlich auch in den Nebenkavitäten, wo die Abkühlung schneller erfolgt, soweit fest geworden ist, dass zumindest einer der beiden Schieber 4 und 5 herausgezogen werden kann. Bei dem vorliegenden Ausführungsbeispiel sei es der Schieber 4, der zuerst herausgezogen wird. Der Schieber 5 verbleibt zunächst noch in seiner Position. Auch der bereits fertig gespritzte, schwarz dargestellte Teil der Bürste bleibt in seiner Position, denn er ist als Teil des späteren Borstenträgers ausgebildet und derart mit Borsten versehen, dass die in den Nebenkavitäten steckenden Borsten den in der Hauptkavität befindlichen Teil des Borstenträgers in seiner Position halten. Um dies zu erreichen bietet es sich an, den nach dem Ziehen des betreffenden Schiebers in der Hauptkavität befindlichen Teil des Borstenträgers mit mehreren, nicht parallel zueinander orientierten Borsten zu versehen, deren Längsachsen insgesamt (gemessen zwischen den beiden sich maximal in der Ausrichtung unterscheidenden Borsten) vorzugsweise einen Winkel von mindestens 45°, besser noch von mindestens 60° zwischen einander einschließen. Wichtig ist, dass der in der Hauptkavität befindliche Teil des Borstenträgers mit so vielen Borsten ausgestattet wird, dass der in der Hauptkavität zurückbleibende Teil des Borstenträgers durch die beim Ziehen des Schiebers entstehenden Reibungskräfte nicht vom Schieber mitgenommen und dadurch - womöglich sogar unter Abscheren seiner Borsten - zumindest ein Stück weit aus der Kavität bzw. aus seiner bestimmungsgemäßen Position herausgezogen wird. Alternativ oder zusätzlich besteht die Möglichkeit, den jeweils beim Ziehen eines Schiebers in der Hauptkavität zurückbleibenden Teil des bereits fertig gespritzten Borstenträgers mit einem oder besser mehreren Halteansätzen 6 zu versehen (vgl. Fig. 1), die für eine zuverlässige Festlegung in Richtung der Längsachse der Hauptkavität sorgen. Die Halteansätze haben vorzugsweise zumindest auf dem überwiegenden Teil ihrer Länge in Richtung senkrecht zur Längsachse der Hauptkavität einen Durchmesser, der größer ist als der Durchmesser der Nebenkavität an ihrer Mündung in die Hauptkavität. Sie sind dabei so kompakt gestaltet, dass sie schneller vollständig erstarren als eine einzelne Borste, was aber von Fig. 1 beides nicht zeichnerisch dargestellt wird.

zweckmäßigerweise sind beide Schieber so ausgeführt, dass sie sich von ihrem distalen Ende hin zu ihrem proximalen Ende verjüngen, zum Beispiel in dem jeder der Schieber an seiner Innenoberfläche leicht kegelig ist, d. h. ein Rohrsegment bildet, dessen Wandstärke vom proximalen zum distalen Ende hin abnimmt. Als proximales Ende eines Schiebers wird dabei das Ende des Schiebers verstanden, welches der Seite, zu der hin der Schieber später herausgezogen wird, zugewandt ist. Das distale Ende ist dementsprechend das der Seite, zu der der Schieber herausgezogen wird, abgewandte Ende des Schiebers. Auf diese Art und Weise wird sichergestellt, dass jeder der Schieber beim Herausziehen die zwar fest gewordene, aber dennoch, aufgrund ihrer erhöhten Temperatur, nach wie vor weiche Kunststoffmasse, die bis zum nächsten Spritzgussschritt in der Form verbleibt, nicht schädigt, sondern möglichst wenig Einfluss auf sie ausübt.

Nachdem der Schieber 4 herausgezogen worden ist, weist die Hauptkavität einen in Richtung der Längsachse so weit, wie vorher der Schieber 4 gesteckt war, durchgehenden Hohlraum auf, in den die borstenbildenden Nebenkavitäten 3.9 bis 3.12 einmünden, die vorher durch den Schieber 4 abgedichtet worden sind. Nun wird vorzugsweise von einer der stirnseiten der Hauptkavität her eine zweite Spritzgussmasse in den durch das Herausziehen des Schiebers 4 in der Hauptkavität entstandenen Hohlraum eingespritzt, von wo aus diese zweite Spritzgussmasse in die Nebenkavitäten 3.9 bis 3.12 fließt und hier die späteren Borsten ausbildet.

Zu diesem Zeitpunkt befindet sich der Schieber 5 noch in seiner ursprünglichen Position und dichtet daher weiterhin die Nebenkavitäten 3.5 bis 3.8 ab. Nach dem vollständigen Einspritzen der zweiten Spritzgussmasse wird abgewartet, bis diese ausreichend fest geworden ist.

Dann wird der zweite Schieber 5 gezogen.

Nachdem der Schieber 5 herausgezogen worden ist, weist die Hauptkavität einen in Richtung der Längsachse so weit, wie vorher der Schieber 5 gesteckt war, durchgehenden Hohlraum auf, in den die borstenbildenden Nebenkavitäten 3.5 bis 3.8 einmünden, die vorher durch den Schieber 5 abgedichtet worden sind. Nun wird in einem dritten Spritzgussschritt, vorzugsweise ebenfalls von einer der stirnseiten der Hauptkavität her, eine dritte Spritzgussmasse in den durch das Herausziehen des Schiebers 5 in der Hauptkavität entstandenen Hohlraum eingespritzt, von wo aus diese zweite Spritzgussmasse in die Nebenkavitäten 3.5 bis 3.8 fließt und hier die späteren Borsten ausbildet.

Auf diese Art und Weise kann sehr einfach eine einstückig spritzgegossene Bürste hergestellt werden, die ein Borstenfeld aufweist, das im hier beschriebenen Ausführungsbeispiel drei unterschiedliche Abschnitte besitzt.

von einem einstückigen Spritzgussteil ist hier deshalb zu reden, weil sich die unterschiedlichen Spritzgussmassen an ihren großflächigen Kontaktstellen miteinander verbinden - bei richtiger Wahl der Parameter erfolgt eine Verschweißung der unterschiedlichen Kunststoffmassen an ihren Kontaktstellen, denn die in einem nachfolgenden Schritt schmelzflüssig eingespritzte, weitere Spritzgussmasse verflüssigt die erste, an sich bereits erstarrte Spritzgussmasse an der Kontaktstelle zumindest oberflächlich, wodurch sich eine Verschweißung einstellt, wenn darauf geachtet wird, dass nur miteinander kompatible (wechselseitige Benetz- und Vermischbarkeit) Kunststoffmassen aufeinander treffen.

So kann beispielsweise die erste Spritzgussmasse ein vergleichsweise harter Kunststoff sein. Das aus den vorzugsweise längeren Borsten, die aus der ersten Spritzgussmasse entstanden sind, bestehende erste Borstenfeld (Nebenkavitäten 3.1 bis 3.4) dient dann dazu, die Wimpern zu kämmen. Darüber hinaus weist der Borstenbesatz ein weiteres Borstenfeld aus denjenigen Borsten auf, die aus einer Spritzgussmasse bestehen, bei der es sich um ein Kunststoffmaterial handelt, das weicher ist als alle anderen borstenbildenden Kunststoffmaterialien (Kavitäten 3.5 bis 3.8). Das so entstandene Borstenfeld kann sehr gut für ein gefühlvolles Auftragen genutzt werden, das weitgehend frei von jedem haptischen "Pieks-Effekt" ist.

Schließlich weist der Borstenbesatz ein drittes Borstenfeld auf, das aus denjenigen Borsten besteht, die beispielsweise aus den Kavitäten 3.9 bis 3.12 hervorgegangen sind. Für diesen Borstenabschnitt wurde eine Spritzgussmasse aus einem Kunststoffmaterial verwendet, das zwar weicher ist als das Kunststoffmaterial, das für den kammbildenden Bereich, d. h. das erste Borstenfeld, verwendet wurde (Kavitäten 3.1 bis 3.4), das jedoch zugleich härter ist als das Kunststoffmaterial, das für das zweite Borstenfeld verwendet wurde (Kavitäten 3.5 bis 3.8).

Die Bürste, die auf diese Art und Weise als einstückiges Kunststoffspritzteil entstanden ist, zeigt die Fig. 2. Man sieht hier zunächst die Seiten, auf denen sich seinerzeit das distale Ende und das proximale Ende des Schiebers befunden haben. Diese Seiten sind in der Fig. 2 mit den Buchstaben D und P markiert. Die Längsachse L der Bürste entspricht der Längsachse L der Hauptkavität, aus der sie hervorgegangen ist.

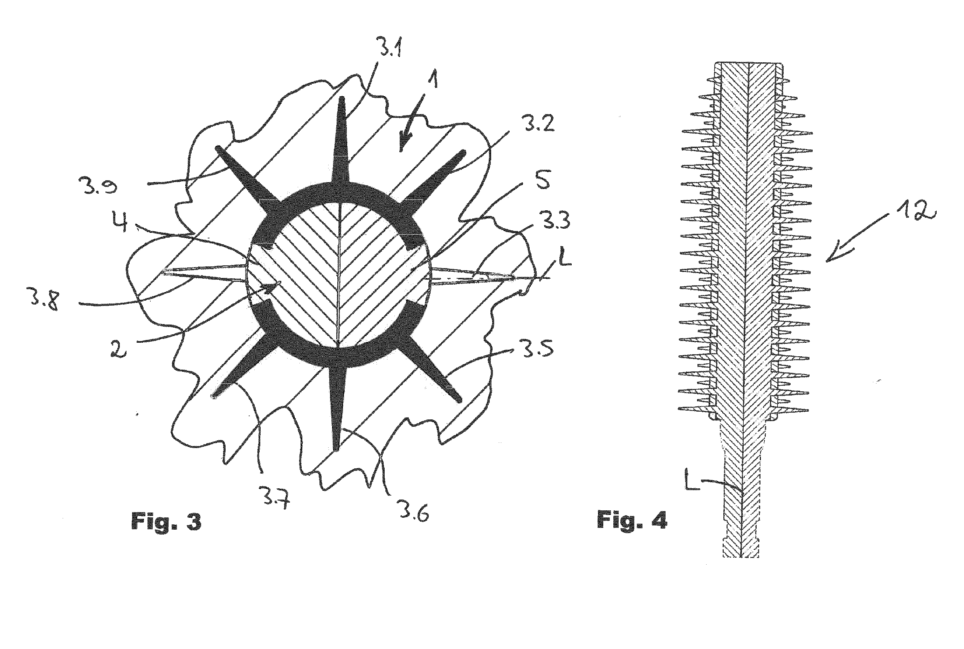

Die Fig. 3 zeigt ein weiteres Ausführungsbeispiel der Erfindung.

Für die Spritzgussform gilt das bereits oben im Zusammenhang mit der Fig. 1 Gesagte.

In die Hauptkavität 2 dieser Spritzgussform sind hier zwei Schieber 4 und 5 eingebracht, die zunächst einen Großteil der Hauptkavität ausfüllen. Jeder der beiden Schieber weist einen leistenartigen Vorsprung auf, der eine Reihe von in Längsrichtung L hintereinander angeordneten Nebenkavitäten abdichtet, so dass in diese Nebenkavitäten zunächst keine Spritzgussmasse eindringen kann.

Die beiden Schieber liegen, hier im Bereich der Mitte der Hauptkavität, gegeneinander an und stützen sich gegeneinander ab, während sie sich mit ihren leistenartigen Vorsprüngen so an der Innenoberfläche der Hauptkavität abstützen, dass sich die Schieber unter dem Einfluss des Einspritzdrucks nicht oder nicht wesentlich in radialer Richtung bewegen können. Auf diese Art und Weise zentrieren sich die beiden Schieber in der Hauptkavität, nehmen dort also immer die gewünschte Sollposition ein.

In einem ersten Schritt wird eine erste Spritzgussmasse in die beiden nicht von den Schiebern blockierten Bereiche der Hauptkavität eingespritzt und dringt von dort aus in die nicht blockierten Nebenkavitäten ein, vergleiche die in Fig. 3 schwarz dargestellten Bereiche.

Das weitere Spritzgussverfahren läuft entsprechend ab, wie das oben bereits im Zusammenhang mit der Fig. 1 geschildert worden ist. Die beiden Schieber 4 und 5 können entweder gemeinsam gezogen werden, so dass der zuvor von ihnen eingenommene Raum und die davon abzweigenden, zuvor noch abgedichteten Nebenkavitäten 3.3 und 3.8 in einem zweiten Schritt mit einer zweiten Spritzgussmasse ausgefüllt werden können. Alternativ ist es natürlich auch möglich die beiden Schieber 4 und 5 einen nach dem anderen zu ziehen, so dass die Bürste am Ende aus drei unterschiedlichen Kunststoffen besteht. Der entscheidende Punkt ist hier der, dass der verbleibende Schieber auch dann, wenn zunächst nur ein Schieber gezogen wird, bei dem nachfolgenden Spritzvorgang kaum instabil wird, obwohl er nach Art eines nur einseitig eingespannten Kragträgers in die Hauptkavität ragt. Denn der verbleibende Schieber und die Hauptkavität sind so gestaltet, dass die bereits mit dem ersten Schuss gespritzte und fest gewordene Kunststoffmasse den verbleibenden Schieber mit abstützt bzw. idealerweise einen den Schieber zentrierenden Beitrag leistet.

Die auf diese Art und Weise entstehende Bürste zeigt die Fig. 4.

Für den Fall, dass nur mit zwei unterschiedlichen Kunststoffmassen gearbeitet werden soll, "verschmelzen" die beiden Schieber 4 und 5 zu einem einheitlichen Schieber, ohne dass die besonders vorteilhafte, zuvor beschriebene Zentrierungsfunktion verloren geht.

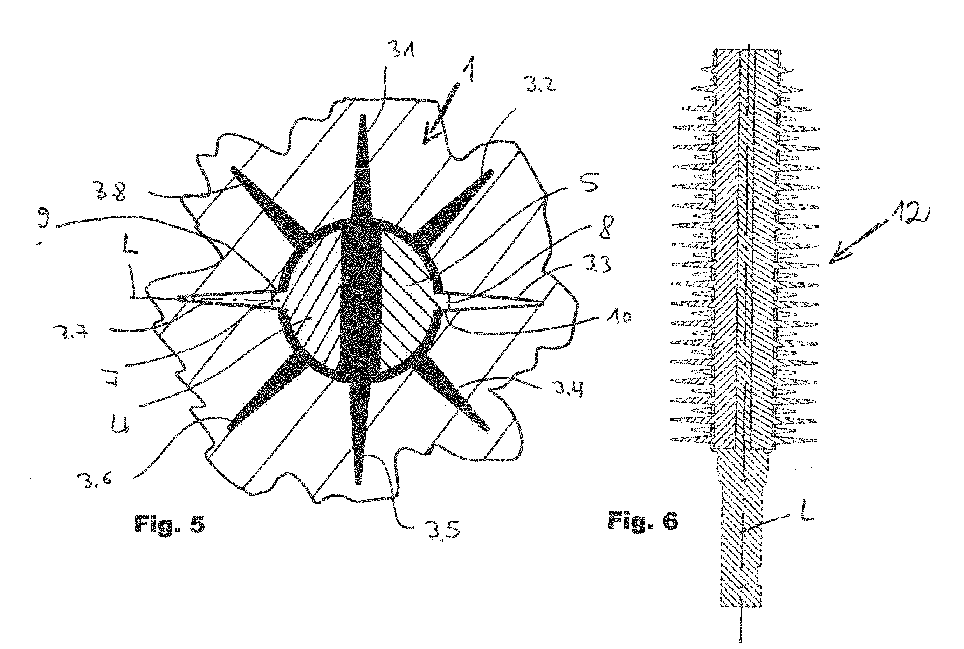

Die Fig. 5 zeigt ein weiteres Ausführungsbeispiel der Erfindung.

Die Dinge, die oben im Zusammenhang mit der Beschreibung der Fig. 1 zu der Spritzgussform, den Schiebern und der Art des Vorgehens gesagt worden sind, gelten hier sinngemäß, sofern nachfolgend nicht etwas anderes beschrieben wird.

Der Unterschied zu dem vorher Geschilderten besteht in zweierlei Dingen:
Die beiden Schieber 4 und 5 liegen hier mit ihren der inneren Oberfläche der Spritzgussform abgewandten Rückseiten nicht gegeneinander an, sondern lassen zwischen sich zumindest örtlich einen Zwischenraum frei. In diesem Zwischenraum kann die erste Spritzgussmasse eindringen, was dazu führt, dass die Schieber 4 und 5 in radialer Richtung nach außen fest gegen den Innenumfang der Spritzgussform gedrückt werden. Dies verbessert die Dichtigkeit der Schieber, stellt also sicher, dass in die Bereiche, die von den Schiebern bestimmungsgemäß blockiert werden, auch wirklich keine Spritzgussmasse eindringt, die dort unerwünscht ist.

Jeder der Schieber ist mit einer Dichtleiste 7 bzw. 8 ausgerüstet, die in eine entsprechende Dichtnut 9 bzw. 10 eingreift. Diese Dichtnuten 9 bzw. 10 sind in Längsrichtung durchgängig verlaufende Nuten, in deren Nutgrund Nebenkavitäten einmünden, die eine Reihe von in Längsrichtung L hintereinanderstehenden Borsten bilden.

Eine solche Ausgestaltung kann bei der Zentrierung dem Längsschieber helfen und die Abdichtung der Mündungen der Nebenkavitäten erleichtern, auch wenn die Schieber die Mündungen nicht großflächig überdecken.

Einen Schnitt durch eine Bürste, die mit Hilfe der von Fig. 5 gezeigten Spritzgussform und den zugehörigen Schiebern hergestellt werden kann, zeigt die Fig. 6.

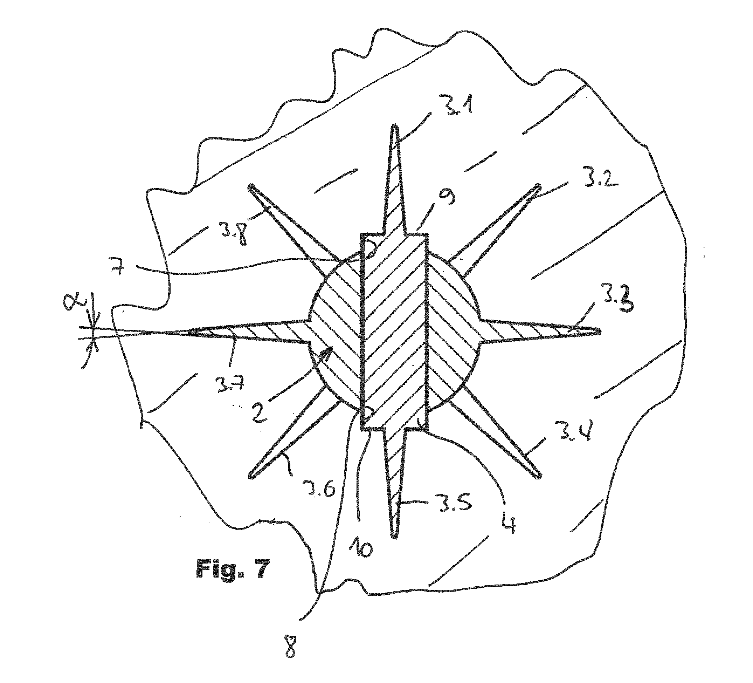

Die Fig. 7 zeigt ein weiteres Ausführungsbeispiel der Erfindung, allerdings nicht in einem nur teilweise ausgespritzten Stadium mit noch in die Hauptkavität eingefahrenem Schieber, sondern nach Beendigung des Spritzgießens. Die Nebenkavitäten 3.2, 3.4, 3.6 und 3.8 liegen hinter der Zeichenebene und sind daher nicht schraffiert dargestellt.

Die Dinge, die oben im Zusammenhang mit der Beschreibung der Fig. 1 zu der Spritzgussform, den Schiebern und der Art des Vorgehens gesagt worden sind, gelten hier sinngemäß, sofern nachfolgend nicht etwas anderes beschrieben wird.

Hier wurde ein Schieber 4 von einer Stirnseite her als Längsschieber in die Hauptkavität eingeschoben. Geführt und in seiner Position innerhalb der Hauptkavität gesichert wird dieser Schieber durch die Nuten 9 und 10, in denen er beim Einschieben läuft. Der Schieber hat zunächst den Mittenbereich der Hauptkavität 2 blockiert und die Nebenkavitäten 3.1 und 3.5 abgedichtet. In Folge dessen wurden mit der ersten, durch die nach links geneigte Schraffierung angedeutete Spritzgussmasse nur die beiden seitlichen Bereiche der Hauptkavität und die davon abzweigenden Nebenkavitäten ausgespritzt. Recht schön zu sehen ist, wie der Schieber in Nuten 9 bzw. 10 eingreift, bei denen es sich um in Längsrichtung verlaufende Nuten handelt, in deren Nutgrund Nebenkavitäten einmünden, die eine Reihe von in Längsrichtung L hintereinanderstehenden Borsten bilden. Der Dichtspalt zwischen der Mündung jeder Nebenkavität, die von diesem Schieber abgedichtet wird, und der Hauptkavität weist eine L-Form auf.

Auf diese Art und Weise wird ein Dichtspalt geschaffen, der nicht kontinuierlich verläuft, sondern an einer Stelle sprunghaft seine Richtung um einen Winkel von 90° ändert. So entsteht eine Art Labyrinth, das eine bessere Abdichtwirkung gewährleistet.

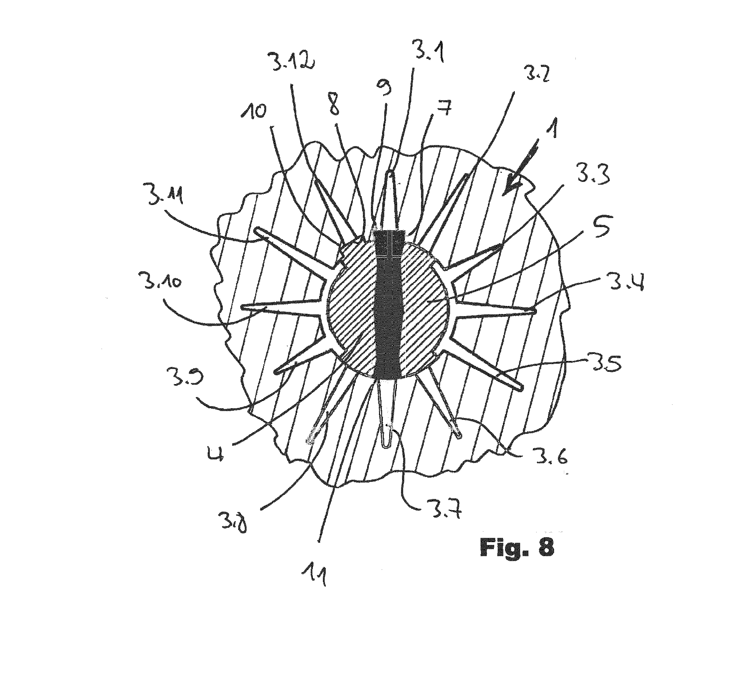

Die Fig. 8 zeigt ein fünftes Ausführungsbeispiel der Erfindung.

Die Dinge, die oben im Zusammenhang mit der Beschreibung der Fig. 1 zu der Spritzgussform, den Schiebern und der Art des Vorgehens gesagt worden sind, gelten hier sinngemäß, sofern nachfolgend nicht etwas anderes beschrieben wird.

Die Besonderheit dieses Ausführungsbeispiels liegt hier darin, dass insgesamt drei Schieber in die Hauptkavität eingesteckt sind, nämlich der mittig gezeigte, schwarz unterlegte Schieber und die beidseitig daran angrenzenden, durch die nach rechts geneigte Schraffur kenntlich gemachten Schieber. Diese drei Schieber können nacheinander herausgezogen werden, so dass nacheinander vier unterschiedliche Spritzgussmassen eingespritzt werden können.

An dem schwarz unterlegten Schieber und an dem links gezeigten Schieber, jeweils oben, wird noch einmal schematisch verdeutlicht, dass die Schieber bei Bedarf mit einer sich nach außen erstreckenden Leiste bzw. sich einem sich nach außen erstreckenden Vorsprung in eine Nut 9, 10 eingreifen können, die die genaue Position des Schiebers festzulegen hilft und vor allem die Abdichtung verbessert. Dies gilt im Besonderen für den links gezeigten schraffierten Schieber. Denn dieser Schieber ist mit einer in Längsrichtung L verlaufenden Leiste 8 ausgerüstet, die in die Nut 10 eingreift. Links und rechts neben der Nut liegt der Schieber zusätzlich an der die Hauptkavität begrenzenden Innenoberfläche der Spritzgussform an. Der so entstehende Dichtspalt ändert zweimal seine Richtung um je 90° und bildet dadurch eine Art Labyrinth, das besonders zuverlässig abdichtet.

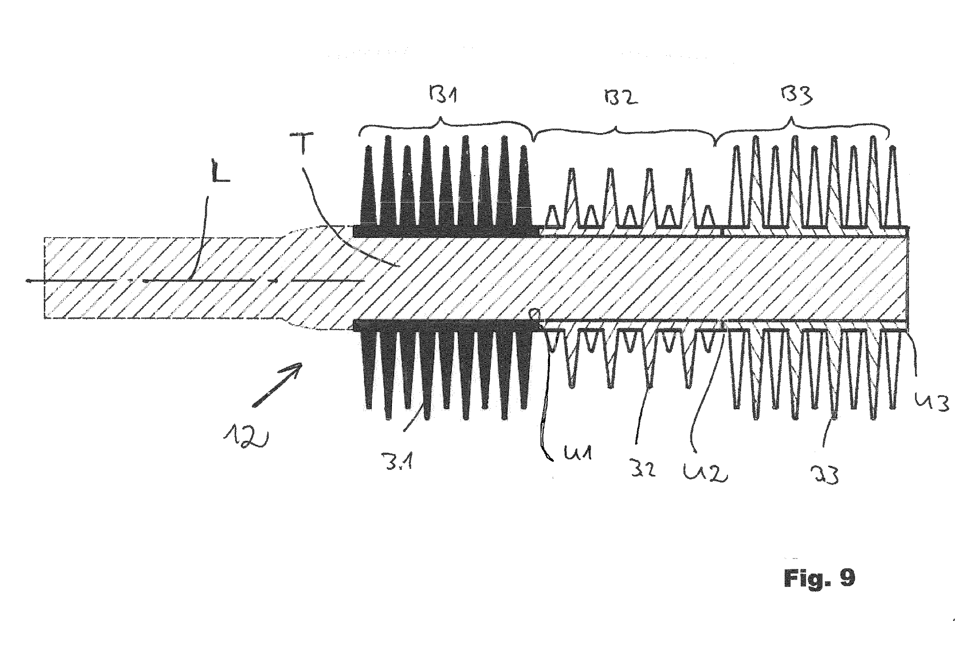

Die Fig. 9 zeigt eine Bürste, an Hand derer ein sechstes Ausführungsbeispiel der Erfindung erkennbar wird.

Die Bürste 12 besteht aus einem vorgeformten und dann in eine Spritzgussform eingelegten Träger T. Der Träger T kommt innerhalb der zweiten Spritzgussform, in die er eingelegt wird, zwischen den Umfangslinien U1 und U3 im Inneren eines rohrförmigen Schiebers zu liegen, der in diesem ersten Schritt die Bereiche B2 und B3 blockiert, d. h. verhindert, dass Spritzgussmasse aus dem Bereich B1 in die Bereiche B2 und B3 eintritt. Dann wird der schwarz unterlegte Bereich mit einer ersten Spritzgussmasse ausgespritzt, z. B. einer Spritzgussmasse, deren Material am weichsten von allen für die Bürste insgesamt verwendeten Materialien ist. Dabei werden natürlich auch die Borsten des Typs 3.1 ausgebildet. Im Anschluss daran wird der rohrförmige Schieber ein Stück weit zurückgezogen, so weit, bis sein stirnseitiges freies Ende auf der Höhe der Umfangslinie U2 liegt. Nun wird der Bereich B2 zwischen den Umfangslinien U1 und U2 ausgespritzt, wobei gleichzeitig auch die Borsten des Typs 3.2 ausgebildet werden. Das hierzu verwendete Spritzgussmaterial kann das härteste aller für die Bürste verwendeten Materialien sein. Schließlich wird der Schieber in Richtung der Längsachse L bis zur Umfangslinie U3 zurückgezogen, woraufhin der Bereich B3 zwischen den Umfangslinien U2 und U3 ausgespritzt werden kann, wobei auch die Borsten des Typs 3.3 gebildet werden. Das hierfür verwendete Spritzgussmaterial kann ein solches sein, dessen Härte der Härte des Materials, das für den ersten, schwarz unterlegten Bereich verwendet wurde, entspricht oder dessen Härte im Bereich zwischen der Härte des härtesten und des weichsten Materials liegt. Anschließend wird die fertige Bürste entformt.

Anstatt einen vorgeformten Träger T zu verwenden, besteht auch die Möglichkeit, den Träger in situ herzustellen, indem der Schieber zunächst vollständig eingeschoben wird, so dass er die Bereiche B1, B2 und B3 komplett blockiert, während in einem ersten Schritt die Kunststoffmasse eingespritzt wird, die den Träger bildet. Sodann wird so verfahren, wie zuvor geschildert.

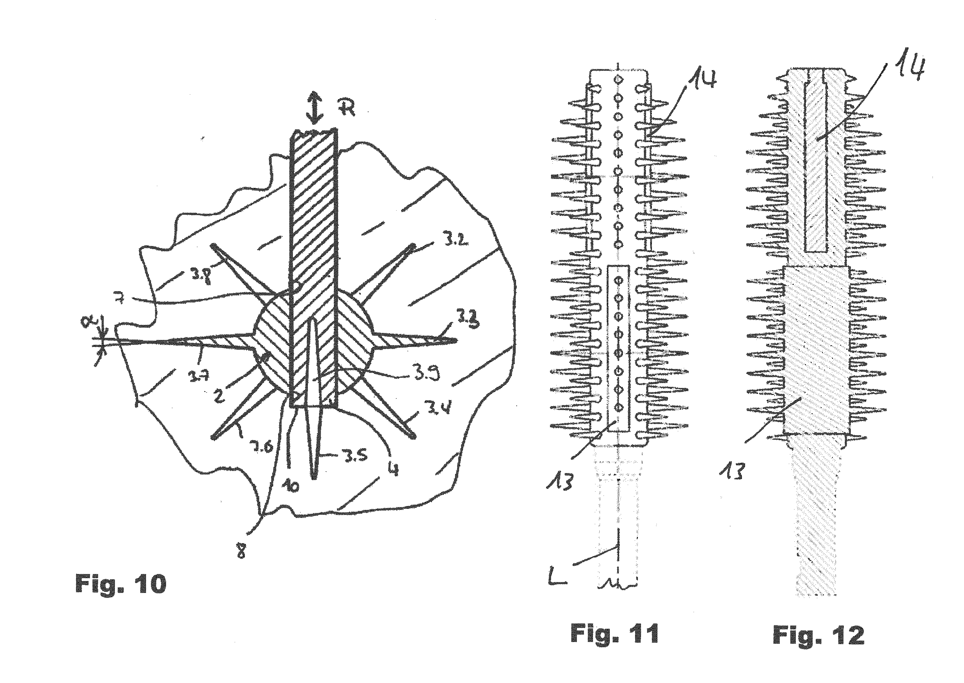

Die Fig. 10 zeigt ein siebtes Ausführungsbeispiel der Erfindung.

Die Spritzgussform als solche ist hier vom Grundsatz her genauso aufgebaut, wie für die von Fig. 1 gezeigte Spritzgussform beschrieben. Der wesentliche Unterschied ist der, dass zumindest in einem der tortenstückartigen Segmente ein Durchbruch vorgesehen ist, über den ein Radialschieber 4 in radialer Richtung in die Formkavität eingeschoben und auch wieder aus ihr herausgezogen werden kann, vgl. den Pfeil R in Fig. 10.

Im Zuge des Einschiebens durchquert der Radialschieber 4 die Hauptkavität und legt sich schließlich auf der (in Einschieberichtung gesehen) gegenüberliegenden Seite der Hauptkavität in eine Nut bzw. Dichtnut 10 ein. In den Grund dieser Nut münden eine oder mehrere in Längsrichtung in einer Reihe angeordnete Nebenkavitäten 3.5. Wie man sieht, werden die Mündungen dieser Kavitäten von den Radialschiebern abgedeckt und daher nicht mit der oder den Spritzgussmassen, ausgefüllt, die gemäß Fig. 10 in die links und rechts neben dem Radialschieber frei gebliebenen Bereiche der Hauptkavität eingespritzt worden sind.

Dass die Lage des Schiebers 4 innerhalb der Hauptkavität durch sein Eingreifen in die Nut 10 stabilisiert wird, ist unschwer nachzuvollziehen.

Die besondere Dichtwirkung, die durch das Eingreifen des Radialschiebers 4 in die Dichtnut 10 bewirkt wird, ist die gleiche, wie im Zusammenhang mit Fig. 7 beschrieben. Das dort Gesagte gilt hier ebenfalls.

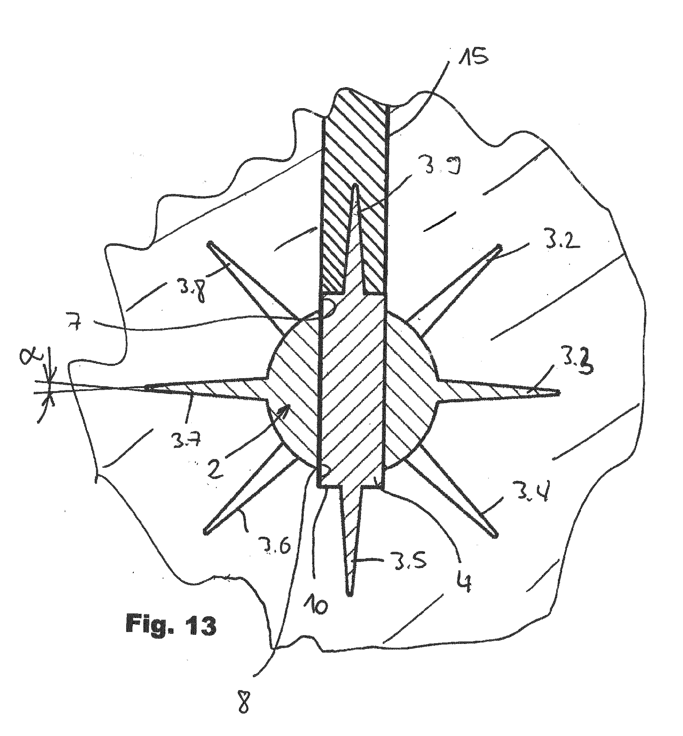

Nachdem die Spritzgussmasse erstarrt ist, die in die links und rechts neben dem Radialschieber 4 freibleibenden Bereiche der Hauptkavität eingespritzt worden ist (vgl. Fig. 10), wird der Radialschieber 4 völlig gezogen und gegen einen Ersatz-Radialschieber 15 ersetzt, der seinerseits derart mit Nebenkavitäten ausgerüstet ist und (nur) soweit eingeschoben wird, wie das die Fig. 13 zeigt.

Die Bürste kann nun mit Hilfe eines zweiten Spritzgussvorgangs fertig gespritzt werden. Fig. 13 zeigt diesen fertig gespritzten Zustand.

Im Rahmen einer verbesserten Ausführungsform ist vorgesehen, dass schon der ursprüngliche Radialschieber 4 mit einer oder mehreren Nebenkavitäten 3.9 zur Ausbildung von Borsten ausgerüstet ist, so wie bereits von Fig. 10 gezeigt wird. Er muss daher nur ein bestimmtes Stück weit zurückgezogen werden, um eine Anordnung auszubilden, die der von Fig. 13 gezeigten Anordnung entspricht und ein Fertigspritzen der Bürste erlaubt.

Das soeben anhand der Fig. 10 erläuterte Ausführungsbeispiel, das vorzugsweise mit einem Radialschieber 4 arbeitet, kann leicht so abgewandelt werden, dass damit ein Mascaraapplikator gespritzt werden kann, wie ihn die Fig. 11 und 12 zeigen.

Um einen solchen Mascaraapplikator herzustellen, wird die Spritzgussform gemäß Fig. 10 so abgewandelt, dass zwei in Längsrichtung 4 hintereinanderliegende Schieber zum Einsatz kommen. Vorzugsweise werden die beiden Schieber um 90° (bezogen auf ihre Einschubrichtung) relativ zueinander verdreht angeordnet.

Jeder einzelne Schieber ist vorzugsweise so gestaltet, wie anhand Fig. 10 bzw. 13. erläutert. Der erste Schieber hält zunächst eine Kavität frei, die nach ihrem Ausspritzen den ersten Kunststoffbereich 13 bildet, der in Fig. 11 und 12 gezeigt ist. Der zweite Schieber hält zunächst eine Kavität frei, die nach ihrem Ausspritzen den zweiten Kunststoffbereich 14 bildet, vgl. Fig. 11 und 12.

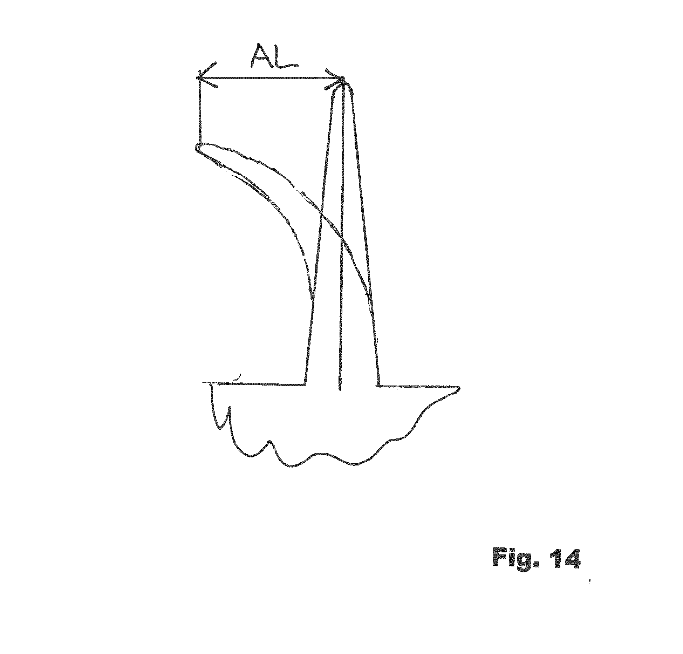

Klarstellend ist zu vermerken, dass unter einer Borste im Sinne der Erfindung vorzugsweise nur ein solches stabförmiges Gebilde verstanden wird, dessen Querschnitt wesentlich kleiner als seine Länge ist, derart, dass sich die freie Spitze des Gebildes um mindestens den fünffachen Betrag (AL) und besser den zehnfachen Betrag (AL) des maximalen Durchmessers des Gebildes auslenken lässt, ohne das Gebilde dauerhaft zu verformen, vgl. Fig. 14.

Der Durchmesser bzw. mittlere Durchmesser der Gebilde, die im Rahmen dieser Erfindung Borsten genannt werden, liegt vorzugsweise zwischen 0,15 mm und 1 mm, idealerweise zwischen 0,15 mm und 0,6 mm.

Der Durchmesser am Außenumfang des Borstenfeldes liegt vorzugsweise zwischen 4 mm und 8 mm.

### Bezugszeichenliste

- 1: Spritzgussform
- 2: Hauptkavität
- 3: Nebenkavität (3.1, 3.2, 3.3 usw.)
- 4: erster Schieber
- 5: zweiter Schieber
- 6: Halteansatz
- 7: Leiste bzw. Dichtleiste
- 8: Leiste bzw. Dichtleiste
- 9: Nut bzw. Dichtnut
- 10: Nut bzw. Dichtnut
- 11: dritter Schieber
- 12: Bürste, auch Applikator genannt
- 13: von einem ersten Radialschieber ausgebildeter Kunststoffbereich
- 14: von einem zweiten Radialschieber ausgebildeter Kunststoffbereich
- 15: Ersatz-Radialschieber
- L: Längsachse Bürste bzw. Hauptkavität
- L: Längsachse Nebenkavität bzw. Borste
- D: distales Ende Schieber
- P: Proximales Ende Schieber
- AL: Auslenkung
- U: Umfangslinie (U1, U2, U3)
- B: Bereich (B1, B2, B3)
- α: Winkel Kavität
- T: Träger

## Patentansprüche

1. Verfahren zur Herstellung einer Bürste, insbesondere in Gestalt eines Mascaraapplikators, mit aus unterschiedlichen Spritzgussmassen spritzgegossenen Borsten mit Hilfe einer Spritzgussform (1), die eine Hauptkavität (2) aufweist, welche den Borstenträger abbildet, und davon abgehende Nebenkavitäten (3.1 bis 3.12), von denen jeweils eine Nebenkavität eine einzige Borste abbildet, wobei in nacheinander folgenden Schritten zumindest eine erste und dann eine zweite Spritzgussmasse in die Hauptkavität eingespritzt wird, wobei in die Hauptkavität mindestens ein Schieber (4, 5 bzw. 11) eingebracht wird, der einen Teil der Nebenkavitäten derart verschließt, dass die erste Spritzgussmasse nur in einen anderen Teil der Nebenkavitäten einschießt, woraufhin der Schieber (4, 5) gezogen wird und die zweite Spritzgussmasse so eingespritzt wird, dass sie in die bisher von dem Schieber verschlossenen Nebenkavitäten einschießt **dadurch gekennzeichnet, dass** der Schieber (4, 5) mindestens eine sich in Richtung parallel zur Längsachse (L) erstreckende Leiste (7, 8) aufweist, die im in die Spritzgussform eingesetzten Zustand die zur Hauptkavität (2) hin offenen Mündungen einer Reihe von Nebenkavitäten abdichtet, welche an dem fertigen Applikator eine Reihe von in Längsrichtung hintereinanderstehenden Borsten abbilden.

2. Verfahren zur Herstellung einer Bürste, insbesondere in Gestalt eines Mascaraapplikators, nach Anspruch 1, **dadurch gekennzeichnet, dass** die zweite Spritzgussmasse durch jenen Hohlraum an die noch nicht gefüllten Nebenkavitäten herangeführt wird, den der Schieber (4, 5) in der Hauptkavität nach seinem Ziehen hinterlassen hat.

3. Verfahren zur Herstellung einer Bürste, insbesondere in Gestalt eines Mascaraapplikators, nach einem der vorhergehenden Ansprüche, **dadurch gekennzeichnet, dass** der Schieber (4, 5) und die Spritzgussform so ausgestaltet sind, dass der Schieber (4, 5) in einer Richtung im Wesentlichen oder vollständig parallel zur Längsachse (L) des Mascaraapplikators aus der Hauptkavität herausgezogen werden kann.

4. Verfahren zur Herstellung einer Bürste, insbesondere in Gestalt eines Mascaraapplikators, nach _Anspruch 1, **dadurch gekennzeichnet**, das die Leiste (7, 8) in eine am Umfang der Hauptkavität angebrachte, sich in Richtung im Wesentlichen parallel zur Längsachse des Applikators erstreckende Nut (9, 10) eingreift.

5. Verfahren zur Herstellung einer Bürste, insbesondere in Gestalt eines Mascaraapplikators, nach Anspruch 4, **dadurch gekennzeichnet, dass** die zur Hauptkavität hin offenen Mündungen einer Anzahl von Nebenkavitäten in den Nutgrund münden.

6. Verfahren zur Herstellung einer Bürste, insbesondere in Gestalt eines Mascaraapplikators, nach Anspruch 4 oder nach Anspruch 5, **dadurch gekennzeichnet, dass** die Leiste (7, 8) in der Nut (9, 10) dichtend anliegt und zusätzlich auf zumindest einer Seite neben der Nut.

7. Verfahren zur Herstellung einer Bürste, insbesondere in Gestalt eines Mascaraapplikators, nach einem der vorhergehenden Ansprüche, **dadurch gekennzeichnet, dass** der Schieber (4, 5) mehrteilig ist.

8. Verfahren zur Herstellung einer Bürste, insbesondere in Gestalt eines Mascaraapplikators, nach einem der vorhergehenden Ansprüche, **dadurch gekennzeichnet, dass** der Schieber ein Radialschieber ist, der in radialer Richtung in die Hauptkavität eingeschoben wird.

9. Vorrichtung zur Herstellung einer Bürste, insbesondere in Gestalt eines Mascaraapplikators, mit Hilfe des Verfahren nach einem der Ansprüche 1 bis 8.

## Claims

1. A method for producing a brush, particularly in the form of a mascara applicator, with bristles injection molded out of different injection molding compounds, using an injection mold (1) that has a main cavity (2), which forms the bristle support, and secondary cavities (3.1 to 3.12) blanching off from this, with each secondary cavity forming a single bristle and with at least one first injection molding compound being injected into the main cavity, followed by a second injection molding compound in successive steps, and at least one slider (4, 5, or 11) is inserted into the main cavity and closes part of the secondary cavities so that the first injection molding compound only travels into another part of the secondary cavities after which the slider (4, 5) is withdrawn and the second injection molding compound is injected so that it travels into the secondary cavities previously closed by the slider, **characterized in that** the slider (4, 5) has at least one ridge (7, 8) extending in a direction parallel to the longitudinal axis (L), which, when the slider is inserted into the injection mold, seals the mouths of a row of secondary cavities that open into the main cavity (2) and in the finished applicator, form a row of protruding bristles situated one after another in the longitudinal direction.

2. The method for producing a brush, particularly embodied in the form of a mascara applicator, according to claim 1, **characterized in that** the second injection molding compound is conveyed to the not yet filled secondary cavities that the slider (4, 5) has left behind in the main cavity after being withdrawn.

3. The method for producing a brush, particularly embodied in the form of a mascara applicator, according to one of the preceding claims, **characterized in that** the slider (4, 5) and the injection mold are embodied so that the slider (4, 5) can be withdrawn from the main cavity in a direction essentially or completely parallel to the longitudinal axis (L) of the mascara applicator.

4. The method for producing a brush, particularly embodied in the form of a mascara applicator, according to claim 1, **characterized in that** the ridge (7, 8) engages in a groove (9, 10) that is provided at the circumference of the main cavity and extends in a direction essentially parallel to the longitudinal axis of the applicator.

5. The method for producing a brush, particularly embodied in the form of a mascara applicator, according to claim 4, **characterized in that** the mouths that open into the main cavity feed into a number of secondary cavities at the bottom of the groove.

6. The method for producing a brush, particularly embodied in the form of a mascara applicator, according to claim 4 or claim 5, **characterized in that** the ridge (7, 8) rests in a sealing fashion in the groove (9, 10) and also next to the groove on at least one side.

7. The method for producing a brush, particularly embodied in the form of a mascara applicator, according to one of the preceding claims, **characterized in that** the slider (4, 5) is composed of multiple parts.

8. The method for producing a brush, particularly embodied in the form of a mascara applicator, according to one of the preceding claims, **characterized in that** the slider is a radial slider that is inserted into the main cavity in a radial direction.

9. An apparatus for producing a brush, particularly embodied in the form of a mascara applicator, using the method according to one of claims 1 through 8.

## Revendications

1. Procédé pour fabriquer une brosse, en particulier sous la configuration d'un applicateur de mascara, comprenant des poils coulés par injection à partir de masses d'injection différentes avec l'aide d'un moule de coulée par injection (1), lequel comprend une cavité principale (2) qui constitue l'image du support de poils, et des cavités auxiliaires (3.1 à 3.12) partant de celle-ci, parmi lesquelles une cavité auxiliaire respective constitue l'image d'un unique poil, et dans des étapes mutuellement successives on injecte dans la cavité principale au moins une première masse d'injection et ensuite une seconde masse d'injection, dans lequel on introduit dans la cavité principale au moins un tiroir (4, 5 11) qui obture une partie des cavités auxiliaires de telle façon que la première masse d'injection ne pénètre que dans une autre partie des cavités annexes, suite à quoi le tiroir (4, 5) est tiré et la seconde masse d'injection est injectée de telle façon qu'elle pénètre dans les cavités annexes obturées jusqu'ici par le tiroir,
**caractérisé en ce que** le tiroir (4, 5) comprend au moins un listel (7, 8) s'étendant dans une direction parallèle à l'axe longitudinal (L) et qui, dans la situation mise en place dans le moule de coulée par injection, étanche les embouchures, ouvertes vers la cavité principale (2), d'une rangée de cavités annexes qui constituent l'image, dans l'applicateur terminé, d'une rangée de poils dressés les uns derrière les autres en direction longitudinale.

2. Procédé pour fabriquer une brosse, en particulier sous la configuration d'un applicateur de mascara, selon la revendication 1, **caractérisé en ce que** la seconde masse d'injection est amenée aux cavités annexes qui ne sont pas encore remplies via la cavité que le tiroir (4, 5) a laissé derrière lui dans la cavité principale après avoir été tiré.

3. Procédé pour fabriquer une brosse, en particulier sous la configuration d'un applicateur de mascara, selon l'une des revendications précédentes, **caractérisé en ce que** le tiroir (4, 5) et le moule de coulée par injection sont conçus de telle façon que le tiroir (4, 5) peut être extrait hors de la cavité principale dans une direction essentiellement ou entièrement parallèle à l'axe longitudinal (L) de l'applicateur de mascara.

4. Procédé pour fabriquer une brosse, en particulier sous la configuration d'un applicateur de mascara, selon la revendication 1, **caractérisé en ce que** le listel (7, 9) s'engage dans une rainure (9, 10) ménagée à la périphérie de la cavité principale et s'étendant en direction sensiblement parallèle à l'axe longitudinal de l'applicateur.

5. Procédé pour fabriquer une brosse, en particulier sous la configuration d'un applicateur de mascara, selon la revendication 4, **caractérisé en ce que** les embouchures, ouvertes vers la cavité principale, d'un certain nombre de cavités annexes, débouchent dans le fond de la rainure.

6. Procédé pour fabriquer une brosse, en particulier sous la configuration d'un applicateur de mascara, selon la revendication 4 ou 5, **caractérisé en ce que** le listel (7, 8) s'applique de façon étanche dans la rainure (9, 10) et additionnellernent contre au moins un côté à côté de la rainure.

7. Procédé pour fabriquer une brosse, en particulier sous la configuration d'un applicateur de mascara, selon l'une des revendications précédentes, **caractérisé en ce que** le tiroir (4, 5) est en plusieurs pièces.

8. Procédé pour fabriquer une brosse, en particulier sous la configuration d'un applicateur de mascara, selon l'une des revendications précédentes, **caractérisé en ce que** le tiroir est un tiroir radial, qui est introduit dans la cavité principale en direction radiale.

9. Appareil pour fabriquer une brosse, en particulier sous la configuration d'un applicateur de mascara, avec l'aide du procédé selon l'une des revendications 1 à 8.
